# EUROPEAN PATENT APPLICATION

(11) **EP 4 301 017 A1**
(43) Date of publication of application: **03.01.2024**
(21) Application number: 21928433.8
(22) Date of filing: 01.03.2021
(51) Int. Cl.: H04W 8/18

(54) **INFORMATION TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LYU, Xiaoqiang, Dongguan, Guangdong 523860 (CN); LUO, Chaoming, Dongguan, Guangdong 523860 (CN)
(74) Representative: Taor, Simon Edward William
(86) International application number: PCT/CN2021/078535
(87) International publication number: WO 2022/183342

(57) **Abstract**

The present application relates to the technical field of Internet of Things, and provides an information transmission method and apparatus, a device, and a storage medium. The method comprises: a server sends resource change information to a client, the resource change information being used for indicating changes of a first element in a first attribute of a first service, the first attribute referring to an array attribute of the first service, and the first element referring to an element that changes in elements of the first attribute. In embodiments of the present application, when an array type of resources changes, the server pushes only the changing portion of the resources, so that the client can specify the changing portion of the resources without consuming a large amount of processing resources, thereby reducing processing overheads of the client, saving the processing resources of the client, also saving network transmission resources, and better adapting to complex resource subscription and pushing.

## Description

### TECHNICAL FIELD

Embodiments of the present disclosure relate to the field of the Internet of Things technologies, and more particularly, to a method and apparatus for transmitting information, a device and a storage medium.

### BACKGROUND

It has become a common behavior in people's production and life to subscribe to resource providers for interested resources (such as news, road conditions, weather forecasts, etc.) through clients installed and running on terminals. As soon as a user subscribes to a resource, a resource provider of this resource sends, through a server, relevant contents of this resource to a client logged in by the user.

With the development of resource subscription technologies, in addition to Device To Cloud (D2C) and other fields, the resource subscription technologies have gradually gained increasingly applications in the Internet of Things, Device To Device (D2D) and other fields. For example, in a smart home scenario, the user subscribes to an attribute (e.g., a switch attribute, a color temperature attribute, a brightness attribute, etc.) of a smart light in a house through a client installed in a terminal, and after the success of subscription, the smart light can send a condition of the attribute subscribed by the user to the client, so that the user keeps track of a status of the smart light in time. In the related art, in a case where the attribute of the smart light changes, for example, the switch attribute of the smart light changes from OFF to ON, the smart light will send the changed attribute to the client, so that the user can grasp the change in time.

Based on this, if the subscribed resource is an array-type resource, when the array-type resource changes, the server will send the changed resource to the client. For example, assuming that the brightness attribute of the smart light is an array attribute (A1, A2... A100), when the element A1 is removed from the brightness attribute, the smart light sends the changed brightness attribute (A2... A100) to the client.

### SUMMARY

Embodiments of the present disclosure provide a method and apparatus for transmitting information, a device and a storage medium. The following is technical solutions.

In a first aspect, embodiments of the present disclosure provide a method for transmitting information, which is performed by a client, and the method includes:
receiving resource change information from a server, wherein the resource change information is used to indicate a change of a first element in a first attribute of a first service, the first attribute is an array attribute of the first service, and the first element is an element of the first attribute that has changed.

In another aspect, embodiments of the present disclosure provide a method for transmitting information, which is performed by a server, and the method includes:
sending resource change information to a client, wherein the resource change information is used to indicate a change of a first element in a first attribute of a first service, the first attribute is an array attribute of the first service, and the first element is an element of the first attribute that has changed.

In yet another aspect, embodiments of the present disclosure provide an apparatus for transmitting information, which is provided in an electronic device, and the apparatus includes:
an information receiving module, configured to receive resource change information from a server, wherein the resource change information is used to indicate a change of a first element in a first attribute of a first service, the first attribute is an array attribute of the first service, and the first element is an element of the first attribute that has changed.

In yet another aspect, embodiments of the present disclosure provide an apparatus for transmitting information, which is provided in an electronic device, and the apparatus includes:
an information sending module, configured to send resource change information to a client, wherein the resource change information is used to indicate a change of a first element in a first attribute of a first service, the first attribute is an array attribute of the first service, and the first element is an element of the first attribute that has changed.

In still another aspect, embodiments of the present disclosure provide an electronic device, including: a processor, and a transceiver connected to the processor; wherein:
the transceiver is configured to receive resource change information from a server, wherein the resource change information is used to indicate a change of a first element in a first attribute of a first service, the first attribute is an array attribute of the first service, and the first element is an element of the first attribute that has changed.

In still another aspect, embodiments of the present disclosure provide an electronic device, including: a processor, and a transceiver connected to the processor; wherein:
the transceiver is configured to send resource change information to a client, wherein the resource change information is used to indicate a change of a first element in a first attribute of a first service, the first attribute is an array attribute of the first service, and the first element is an element of the first attribute that has changed.

In still another aspect, embodiments of the present disclosure provide a computer-readable storage medium having a computer program stored thereon, wherein the computer program is configured to be executed by a processor of an electronic device to implement the method for transmitting the information on the client side as described above.

In still another aspect, embodiments of the present disclosure provide a computer-readable storage medium having a computer program stored thereon, wherein the computer program is configured to be executed by a processor of an electronic device to implement the method for transmitting the information on the server side as described above.

In still another aspect, embodiments of the present disclosure provide a chip, including a programmable logic circuit and/or program instructions, wherein the chip is configured to, when running on an electronic device, implement the method for transmitting the information on the client side as described above.

In still another aspect, embodiments of the present disclosure provide a chip, including a programmable logic circuit and/or program instructions, wherein the chip is configured to, when running on an electronic device, implement the method for transmitting the information on the server side as described above.

In still another aspect, embodiments of the present disclosure provide a computer program product, which is configured to, when running on an electronic device, implement the method for transmitting the information on the client side as described above.

In still another aspect, embodiments of the present disclosure provide a computer program product, which is configured to, when running on an electronic device, implement the method for transmitting the information on the server side as described above.

The technical solutions provided by embodiments of the present disclosure may include beneficial effects:
when the array-type resource subscribed by the client changes, the server pushes the changed part of the resource to the client, so as to avoid repeatedly pushing the unchanged part of the resource to the client. It is because the server only pushes the changed part of the resource when the array-type resource changes, the client can clearly determine the changed part of the resource without spending a lot of processing resources, which reduces the processing overhead of the client and saves the processing resource of the client, and also saves the network transmission resources and realizes better adaptation to the subscription and pushing of a complex type of resource.

### BRIEF DESCRIPTION OF THE DRAWINGS

In order to explain technical solutions in embodiments of the present disclosure more clearly, drawings needed in the description of these embodiments will be briefly introduced below. Obviously, the drawings in the following description are only some embodiments of the present disclosure. For those of ordinary skill in the art, other drawings may be obtained from these drawings without creative efforts.
FIG. 1 is a schematic diagram of a resource subscription system provided by an embodiment of the present disclosure;
FIG. 2 is a flowchart of a method for subscribing a resource provided by an embodiment of the present disclosure;
FIG. 3 is a flowchart of a method for transmitting information provided by an embodiment of the present disclosure;
FIG. 4 is a flowchart of a method for transmitting information provided by another embodiment of the present disclosure;
FIG. 5 is a flowchart of a method for transmitting information provided by yet another embodiment of the present disclosure;
FIG. 6 is a flowchart of a method for transmitting information provided by still another embodiment of the present disclosure;
FIG. 7 is a block diagram of an apparatus for transmitting information provided by an embodiment of the present disclosure;
FIG. 8 is a block diagram of an apparatus for transmitting information provided by another embodiment of the present disclosure;
FIG. 9 is a block diagram of an apparatus for transmitting information provided by yet another embodiment of the present disclosure;
FIG. 10 is a block diagram of an apparatus for transmitting information provided by still another embodiment of the present disclosure;
FIG. 11 is a structural block diagram of an electronic device provided by an embodiment of the present disclosure; and
FIG. 12 is a structural block diagram of an electronic device provided by another embodiment of the present disclosure.

### DETAILED DESCRIPTION

In order to make objectives, technical solutions, and advantages of the present disclosure clearer, implementations of the present disclosure will be further described in detail below with reference to the drawings.

Network architectures and service scenarios described in embodiments of the present disclosure are for more clearly illustrating the technical solutions of embodiments of the present disclosure, and do not constitute limitations on the technical solutions provided by embodiments of the present disclosure. Those of ordinary skill in the art know that, with the evolution of the network architectures and the emergence of new service scenarios, the technical solutions provided in embodiments of the present disclosure are also applicable to similar technical problems.

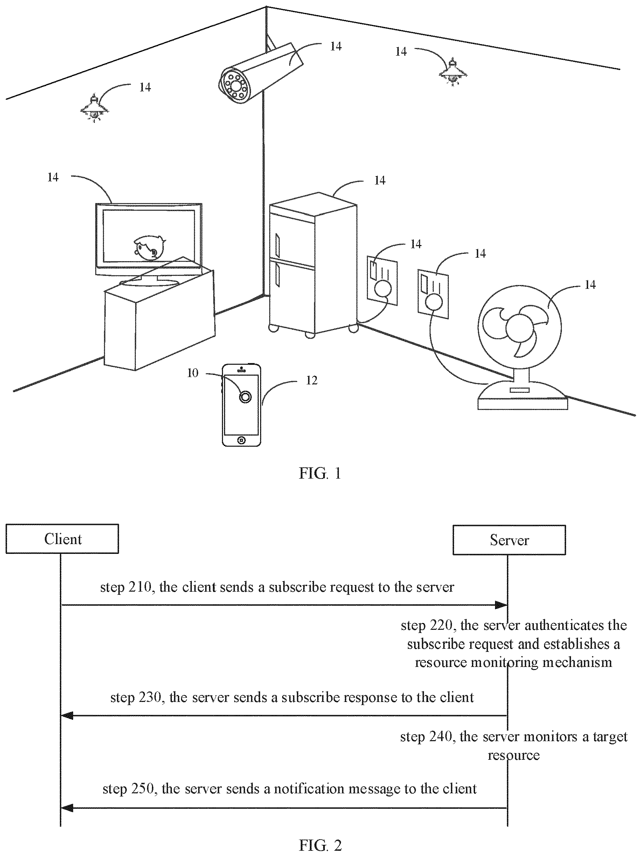

Referring to FIG. 1, which shows a schematic diagram of a resource subscription system provided by an embodiment of the present disclosure, the resource subscription system may include a client 10.

The client 10 refers to a client with resource subscription demands, which can be installed and run on an electronic device 12, for example, a terminal such as a mobile phone, a tablet computer, a game console, an e-book reader, a multimedia playback devices, a wearable device, a Personal Computer (PC) or a vehicle-mounted device, a computer device, etc.. In embodiments of the present disclosure, the client 10 may subscribe to a resource it needs to subscribe from a server.

The server can push to the client 10 the resource subscribed by the client 10. The server can be installed and run in an electronic device 14 (for example, the server is a processing chip provided in the electronic device 14), or can be an independent electronic device 14, which is not limited in embodiments of the present disclosure. Taking the application of the resource subscription system in a smart home scenario as an example, the electronic device 14 can be a smart home device such as a smart TV, a smart speaker, a smart air conditioner, a smart light, a smart door and window, a smart curtain, or a smart socket, as shown in FIG. 1. Note that, the electronic device 14 may also be a server, a computer device, etc. that uniformly store and process data of these smart home devices, which is not limited in embodiments of the present disclosure.

In an example, if the client 10 subscribes to a resource provided by the server, the server can push relevant contents of this resource to the client 10, and the client 10 can also pull the relevant contents of this resource from the server. Optionally, the client 10 and the server may communicate with each other through a network, and the network may be a wired network or a wireless network; alternatively, the client 10 and the server may communicate with each other through a broker or an intermediate device.

Exemplarily, in a case where a transmission between the client 10 and the server complies with a Message Queuing Telemetry Transport (MQTT) protocol, the client 10 and the server communicate with each other through a MQTT broker. In this example, the client 10 is a resource subscriber, the server is a resource publisher, the MQTT broker is a message broker between the client 10 and the server, and the MQTT broker may be implemented as a server. The transmission complying with the MQTT protocol divides a message into two parts: topic and payload, where the topic can be understood as a type of the message, and the payload can be understood as a content of the message. The server can send the topic and the payload of the message to the MQTT broker, and then, in a case where the client 10 subscribes to this topic, the MQTT broker sends the topic and the payload corresponding to the topic to the client 10.

It should be noted that in embodiments of the present disclosure, the client 10 and the server can also be implemented as the same electronic device, that is, the resource publisher can also be the resource subscriber.

Referring to FIG. 2, which shows a flowchart of a method for subscribing a resource provided by an embodiment of the present disclosure, the method can be applied to the resource subscription system shown in FIG. 1. As shown in FIG. 2, the method for subscribing the resource may include the following steps.

In step 210, a client sends a subscribe request to a server.

The subscribe request is used to request to subscribe to a target resource. Embodiments of the present disclosure do not limit the specific content of the target resource. Optionally, the target resource includes one or more of news, a road condition, a weather forecast, a device status, device detection data, etc.. In practical applications, the specific content of the target resource can be specifically determined depending on a scenario or a system to which the method for subscribing the resource is applied. Exemplarily, when the method for subscribing the resource is applied to a smart home scenario, the target resource may be a status of a smart home device (such as a working status of a smart TV), or data detected by the smart home device (such as a temperature measured by a smart thermometer).

Optionally, the subscribe request includes at least one of: an identity of a device where the client is located, an identity of the target resource that the client requests to subscribe to, a transaction identity (also called Request Identity (RI)), a subscribe request identity, where the subscribe request identity is used to identify the transmitted message as the subscribe request; the transaction identity is used to complete the binding between the subscribe request, a subscribe response and a notification message, so that the client correctly identifies the subscribe response and the notification message related to the target resource.

In step 220, the server authenticates the subscribe request and establishes a resource monitoring mechanism.

After receiving the subscribe request from the client, the server can determine whether the client has a subscription permission for the target resource according to the subscribe request. When it is determined that the client has the subscription permission for the target resource, the server can establish a resource monitoring mechanism to detect a change in the target resource.

In step 230, the server sends a subscribe response to the client.

The subscribe response is used to respond to the client's subscribe request, to indicate that the client has successfully subscribed to the target resource, and to indicate to the client that the server starts to monitor the target resource. Optionally, the subscribe response also includes a transaction identity, which is the same as the transaction identity included in the subscribe request. It should be understood that the server can send the subscribe response to the client while establishing the resource monitoring mechanism; or, the server can send the subscribe response to the client after establishing the resource monitoring mechanism; or, the server can send the subscribe response to the client before establishing the resource monitoring mechanism. Embodiments of the present disclosure do not limit an execution sequence of these two steps.

In step 240, the server monitors the target resource.

After establishing the resource monitoring mechanism, the server can monitor the target resource. Embodiments of the present disclosure do not limit a manner in which the server monitors the target resource. Optionally, the server can continuously monitor the target resource; or, the server monitors the target resource every a preset time period, such as every one second.

In step 250, the server sends a notification message to the client.

When the server monitors that the target resource changes, it can send the notification message to the client, and the notification message includes the changed target resource. Optionally, the notification message further includes a transaction identity, which is the same as the transaction identity included in the subscribe request and the transaction identity included in the subscribe response.

Exemplarily, in the smart home scenario, the client subscribes to an attribute of a smart light in a house (that is, the target resource is the attribute of the smart light), such as a switch attribute, a color temperature attribute, a brightness attribute, etc., and after the success of subscription, the smart light can monitor a change in the attribute. In a case where the attribute of the smart light changes, for example, the switch attribute of the smart light changes from OFF to ON, the smart light sends the notification message to the client, and the notification message includes the changed switch attribute.

As can be seen, in a case where the resource subscribed by the client is an array-type resource, when the array-type resource changes, the server will send the changed resource to the client. For example, assuming that the smart light above is composed of 100 light bulbs, and each light bulb corresponds to one element in the attribute, the brightness attribute of the smart light can be an array attribute (A1, A2... A100). If a certain light bulb (corresponding to the element A1) in the smart light has a failure and the brightness becomes dim, the element A1 will change, for example, the element A1 will change to A1⁰. In this case, the smart light will send the changed brightness attribute (A1⁰, A2... A100 ) to the client, although elements A2 to A100 in the brightness attribute are not changed. In this case, the client needs to spend a lot of resources to process the received notification message in order to figure out the change of the target resource, which causes a lot of waste in the processing overhead of the client.

Based on this, the present disclosure provides a method for transmitting information, which can be used to solve the above technical problems. The method for transmitting the information provided by the present disclosure will be described in conjunction with several embodiments in the following.

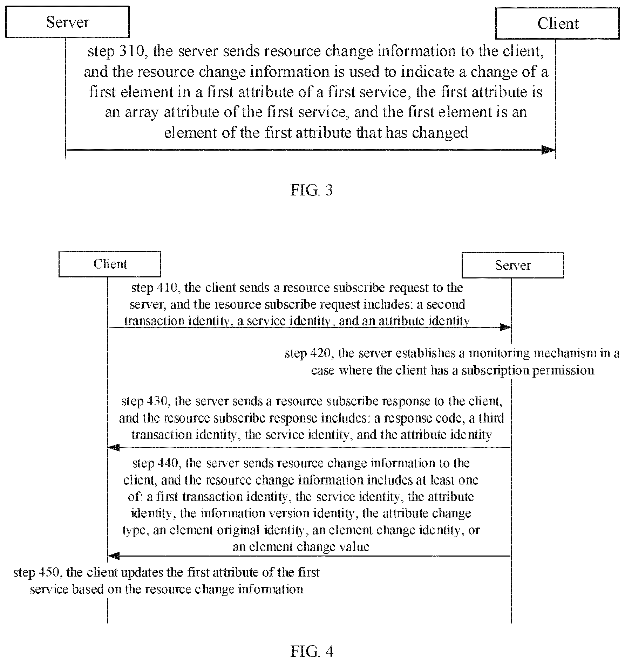

Referring to FIG. 3, which shows a flowchart of a method for transmitting information provided by an embodiment of the present disclosure, the method can be applied to the resource subscription system shown in FIG. 1. As shown in FIG. 3, the method for transmitting the information includes at least some of the following steps.

In step 310, a server sends resource change information to a client, and the resource change information is used to indicate a change of a first element in a first attribute of a first service, the first attribute is an array attribute of the first service, and the first element is an element of the first attribute that has changed.

In embodiments of the present disclosure, a resource subscribed by the client from the server is the first attribute of the first service. The first service corresponds to at least one attribute (it should be understood that the attribute can also be called an instance, which is collectively referred to as an attribute in embodiments of the present disclosure), and the at least one attribute includes an attribute in the form of an array, that is, the array attribute. The first attribute is the array attribute of the first service. Therefore, in embodiments of the present disclosure, the resource subscribed by the client to the server is an array-type resource. Optionally, in a case where the first service corresponds to at least two array properties, the first attribute may be one of the at least two array properties, or may be a plurality of array properties of the at least two array properties, which is not limited in embodiments of the present disclosure. In the following embodiments, the technical solutions of the present disclosure are described by taking the first attribute being one array attribute of the first service as an example, but this does not constitute limitations to the present disclosure.

Exemplarily, in a case where the technical solutions provided by the present disclosure are applied to the smart home scenario, the first service is a smart light service in the smart home scenario, and the properties corresponding to the first service include: the switch attribute, the brightness attribute, and the color temperature attribute. Assuming that the brightness attribute among the properties corresponding to the first service is an array attribute, the first attribute of the first service is the brightness attribute.

Since the first attribute is the array attribute of the first service, the first attribute corresponds to at least two elements (it should be understood that an element may also be called an item, which is collectively referred to as the element in embodiments of the present disclosure). In a case where there is a change of the elements in the first attribute of the first service, the server will send the resource change information to the client (it should be understood that the resource change information can also be called a notification message, which is collectively referred to as the resource change information in embodiments of the present disclosure). The resource change information is used to indicate the change of the first element in the first attribute, and the first element is the element that changes among the elements of the first attribute. Optionally, the first element is one element among the elements of the first attribute, or the first element is a plurality of elements among the elements of the first attribute. Embodiments of the present disclosure do not limit a manner in which the element changes. Optionally, the manner in which an element changes includes any one of: adding the first element; removing the first element; modifying the first element; or replacing a third element with a second element, where the first element includes the second element and the third element.

Exemplarily, the first attribute is (A1, A2... A100), where A1, A2... A100 are elements corresponding to the first attribute. Assuming that the element A1 is removed from the first attribute, the resource change information sent by the server to the client is used to indicate that the element A1 is deleted without sending the changed first attribute (A2... A100) to the client.

Embodiments of the present disclosure do not limit the content of the resource change information. In an example, the resource change information includes at least one of: an attribute change type, an element original identity, an element change identity, and an element change value. For the meaning of these contents, reference may be made to the Table 1 below, which will not be repeated here. Optionally, the resource change information further includes at least one of: a first transaction identity, an information version identity, a service identity (which may be referred to as Service Instance Identity, Siid for short), an attribute identity (which may be referred to as Instance Identity, lid for short). For the meaning of these contents, reference may also be made to the Table 1 below, which will not be repeated here.

The information version identity is used to identify a version of the first attribute of the first service, that is, the information version identity is used to identify the version of the resource subscribed by the client. Optionally, the information version identity is mainly used to identify a version of the change of the first attribute of the first service. For example, when the first attribute of the first service is changed for the first time, the information version identity pushed by the server is 1, and when the first attribute of the first service is changed for the second time, the information version identity pushed by the server is 2, and so on. In an example, the client can determine whether the server has previously performed the resource push according to the information version identity. If it is determined that the server has previously performed the resource push, but the client has not received the resource push, the client performs full pull of subscribed resources from the server, or performs pull of the unreceived part of the resources.

The attribute change type is used to indicate a change type of the first attribute, that is, the attribute change information indicates a manner in which an element of the first attribute changes. Optionally, the attribute change type includes any one of: an add type, a remove type, a modify type, or a replace type. For the meanings of these types, reference may be made to the Table 2 below, which will not be repeated here. When the attribute change type is the replace type, at least two elements among the elements of the first attribute change, that is, the first element includes a second element and a third element. Optionally, the second element/the third element can be either one element or a plurality of elements. Assuming that the replace type is to replace the third element with the second element, a specific implementation of the replace type includes any one of: removing the third element and adding the second element at a position of the third element, or removing the third element and adding the second element at a new position.

**Table 1: Content of resource change information**

| Content | Abbreviation | Meaning |
|---|---|---|
| attribute change type | Change Type | used to indicate a change type of the first attribute |
| element original identity | Original Index | used to indicate an identity of the first element before the change of the first attribute |
| element change identity | Index | used to indicate an identity of the first element after the change of the first attribute |
| element change value | New Value | used to indicate a value of the first element after the change of the first attribute |
| first transaction identity | Transaction Id | used to identify a relationship between the resource change information and a resource subscribe request |
| information version identity | Token | used to identify a version of the first attribute of the first service |
| Service identity | Siid | used to identify the first service |
| attribute identification | lid | used to identify the first attribute |

**Table 2: Attribute change type**

| Type | Abbreviation | Meaning |
|---|---|---|
| add type | Add | including adding the first element to at least one element of the first attribute |
| remove type | Remove | including removing the first element from at least one element of the first attribute |
| modify type | Modify | including modifying the first element in at least one element of the first attribute |
| replace type | Replace | including replacing a third element with a second element in at least one element of the first attribute |

Since the manner in which the element of the first attribute changes are different, the content required to be carried in the resource change information may also be different in the case of different attribute change types, in order to distinguish and indicate the change of the first element. The following Table 3 is the content of the resource change information under the different attribute change types shown in embodiments of the present disclosure as an example. Optionally, the content commonly carried by the resource change information under the different attribute change types includes at least one of: the first transaction identity, the service identity, the attribute identity, and the information version identity. The following Table 3 takes the resource change information always carrying the first transaction identity, the service identity, the attribute identity, and the information version identity as an example for illustration, but this does not constitute limitations to the present disclosure.

**Table 3: Content of resource change information under different attribute change types**

| Attribute change type | Resource change information |
|---|---|
| add type | first transaction identity, service identity, attribute identity, information version identity, attribute change type, element change identity, element change value |
| remove type | first transaction identity, service identity, attribute identity, information version identity, attribute change type, element original identity |
| modify type | first transaction identity, service identity, attribute identity, information version identity, attribute change type, element original identity, element change value |
| replace type | first transaction identity, service identity, attribute identity, information version identity, attribute change type, element original identity, element change identity, element change value |

In embodiments of the present disclosure, a direct communication connection may be established between the client and the server, or an indirect communication connection may be established via a broker or an intermediate device. Exemplarily, in a case where a transmission between the client and the server complies with the MQTT protocol, the client and the server communicate with each other via the MQTT broker. The transmission complying with the MQTT protocol divides a message into two parts: a topic and a payload. The topic can be understood as the type of the message, and the payload can be understood as the content of the message. The server can send the topic and the payload of the message to the MQTT broker, and then, in a case where the client subscribes to the topic, the MQTT broker sends the topic and the payload corresponding to the topic to the client.

Based on this, if the transmission between the client and the server complies with the MQTT protocol in embodiments of the present disclosure, that is, the resource change information complies with the MQTT protocol, the resource change information is divided into two parts: the topic and the payload. The server sends the resource change information to the MQTT broker, and in a case where the client subscribes to the topic of the resource change information, the MQTT broker further sends the resource change information to the client.

Embodiments of the present disclosure do not limit contents respectively included in the topic and the payload of the resource change information. Optionally, the topic of the resource change information includes at least one of: the first information type (used to indicate that transmitted information is the resource change information), the first transaction identity, the information version identity, the attribute change type, the service identity, or the attribute identity. Optionally, the payload of the resource change information includes at least one of: the first transaction identity, the information version identity, the attribute change type, the element original identity, the element change identity, the element change value, the service identity, or the attribute identity. Optionally, the contents carried in the topic and the payload of the resource change information may have the same part, for example, both the topic and the payload of the resource change information include the service identity and the attribute identity, or may not have the same part, which is not limited by embodiments of the present disclosure.

In an example, after the step 310, the method further includes: the client updates the first attribute of the first service based on the resource change information. In embodiments of the present disclosure, since there are many possible changes of the first element in the first attribute, there are also many possible attribute change types in the resource change information, and accordingly, the client updates the first attribute in different manners. After receiving the resource change information, the client may obtain the attribute change type from the resource change information, and accordingly update the first attribute based on the attribute change type. For example, when the attribute change type includes adding the first element, the client adds the first element to at least one element of the first attribute, the identity of the first element is the element change identity, and the value of the first element is the element change value. For another example, when the attribute change type includes removing the first element, the client removes the first element from the at least one element of the first attribute, that is, removes the element corresponding to the element initial identity.

To sum up, according to the technical solutions provided by embodiments of the present disclosure, when the array-type resource subscribed by the client changes, the server pushes the changed part of the resource to the client, so as to avoid repeatedly pushing the unchanged part of the resource to the client. It is because the server only pushes the changed part of the resource when the array-type resource changes, the client can clearly determine the changed part of the resource without spending a lot of processing resources, which reduces the processing overhead of the client and saves the processing resource of the client, and also saves the network transmission resources and realizes better adaptation to the subscription and pushing of a complex type of resource.

In an example, before the step 310, the method further includes: the client sends a resource subscribe request to the server, and the resource subscribe request is used to request to subscribe to the first attribute of the first service.

When the client needs to subscribe to the first attribute of the first service, the client can send the resource subscribe request to the server, and the resource subscribe request is used to request to subscribe to the first attribute of the first service. Embodiments of the present disclosure do not limit the specific content of the resource subscribe request. In an example, the resource subscribe request includes at least one of: a second transaction identity (used to identify the resource subscribe request), a service identity, or an attribute identity. Optionally, the first transaction identity and the second transaction identity are the same, so that the client can determine that there is an association between the resource change information and the resource subscribe request.

In embodiments of the present disclosure, the client can not only subscribe to the resource from the server, but also subscribe to the resource with a specific content and/or the resource with a specific attribute change type. Based on this, in an example, the resource subscribe request further includes at least one of: the attribute change type, or the element original identity. When the client needs to subscribe to the resource with the specific attribute change type from the server, the resource subscribe request can include the attribute change type. For example, the client needs to subscribe to a case where element addition occurs in the first attribute, and the resource subscribe request includes the attribute change type, and the attribute change type is the add type. When the client needs to subscribe to the resource with the specific content from the server, the resource subscribe request can include the element original identity. For example, the client needs to subscribe to a condition of a fourth element in the first property, and the resource subscribe request includes the element original identity, and the element original identity is an element original identity corresponding to the fourth element. When the client needs to subscribe to the resource of the specific content with the specific property change type from the server, the resource subscribe request can include the property change type and the element original identity. It should be understood that if the resource subscribe request includes the element original identity, the property change type typically includes the modify type or the remove type, which, however, does not constitute a limitation to the present disclosure.

It should be noted that if the resource subscribe request includes the attribute change type, the server will send the resource change information to the client only when the change of the first attribute corresponds to the attribute change type, so that the resource change information can not include the attribute change type. If the resource subscribe request includes the element original identity, the server will send the resource change information to the client only when the change of the first attribute corresponds to the change of the element original identity, so that the resource change information can not include the element original identity. It should be understood that this does not constitute a limitation to the present disclosure.

It can be known from the above embodiments that the client and the server can communicate with each other via the MQTT broker. In this case, the resource subscribe request should comply with the MQTT protocol, and the resource subscribe request includes two parts: the topic and the payload. The client sends the resource subscribe request to the MQTT broker, and in a case where the server subscribes to the topic of the resource subscribe request, the MQTT broker further sends the resource subscribe request to the server.

Embodiments of the present disclosure do not limit contents respectively included in the topic and the payload of the resource subscribe request. Optionally, the topic of the resource subscribe request includes at least one of: a second information type (used to indicate that transmitted information is the resource subscribe request), the attribute change type, the element original identity, the second transaction identity, the service identity, or the attribute identity. Optionally, the payload of the resource subscribe request includes at least one of: the attribute change type, the element original identity, the second transaction identity, the service identity, or the attribute identity. In an example, the contents carried in the topic and the payload of the resource subscribe request may have the same part, for example, both the topic and the payload of the resource subscribe request include the service identity and the attribute identity, or may not have the same part, which is not limited by embodiments of the present disclosure.

In an example, after the client sends the resource subscribe request to the server, the method further includes: the server sends a resource subscribe response to the client, and the resource subscribe response is used to indicate that the client has successfully subscribed to the first attribute of the first service.

After receiving the resource subscribe request from the client, the server may send the resource subscribe response to the client to indicate to the client that the first attribute of the first service has been successfully subscribed. Optionally, after receiving the resource subscribe request, the server may first determine whether the client has a subscription permission for the first attribute of the first service, and in a case where the client has the subscription permission to subscribe to the first attribute of the first service, the server sends the resource subscribe response to the client. Optionally, in a case where the server determines that the client has the subscription permission for the first attribute of the first service, the server can simultaneously establish a monitoring mechanism to monitor the first attribute of the first service.

Embodiments of the present disclosure do not limit the specific content of the resource subscribe response. In an example, the resource subscribe response includes at least one of: a response code (used to identify the resource subscribe response), a third transaction identity (used to identify a relationship between the resource subscribe response and the resource subscribe request), the service identity, or the attribute identity. Optionally, the third transaction identity is the same as the above-mentioned second transaction identity and first transaction identity. Optionally, the server may also send the current content of the resource subscribed by the client to the client, while sending the resource subscribe response to the client, and the current content may be carried in the resource subscribe response. Based on this, optionally, the resource subscribe response further includes at least one of: the attribute value (used to indicate the value of the first attribute), and the information version identity.

It can be known from the above embodiments that the client and the server can communicate with each other via the MQTT broker. In this case, the resource subscribe response should comply with the MQTT protocol, and the resource subscribe response includes two parts: the topic and the payload. The server sends the resource subscribe response to the MQTT broker, and in a case where the client subscribes to the topic of the resource subscribe response, the MQTT broker further sends the resource subscribe response to the client.

Embodiments of the present disclosure do not limit contents respectively included in the topic and the payload of the resource subscribe response. Optionally, the topic of the resource subscribe response includes at least one of: a third information type (used to indicate that transmitted information is the resource subscribe response), the response code, the third transaction identity, the service identity, the attribute identity, or the information version identity. Optionally, the payload of the resource subscribe response includes at least one of: the response code, the third transaction identity, the service identity, the attribute identity, the attribute value, or the information version identity. In an example, the contents carried in the topic and the payload of the resource subscribe response may have the same part, for example, both the topic and the payload of the resource subscribe response include the service identity and the attribute identity, or may not have the same part, which is not limited by embodiments of the present disclosure.

To sum up, in the technical solution provided by embodiments of the present disclosure, when the client has a resource subscription requirement, the client sends the resource subscribe request to the server to request to subscribe to the required resource. Moreover, in embodiments of the present disclosure, by carrying the attribute change type and/or the element original identity in the resource subscribe request, it is achieved that the client subscribes to the resource with the specific attribute change type and/or the specific content from the server, which enriches the resource subscription manner, and makes the resource subscription more flexible and diverse.

In the following, the method for transmitting the information provided by the present disclosure will be described with reference to several examples.

Referring to FIG. 4, which shows a flowchart of a method for transmitting information provided by another embodiment of the present disclosure, the method can be applied to the resource subscription system shown in FIG. 1. As shown in FIG. 4, the method for transmitting the information includes at least some of the following steps.

In step 410, a client sends a resource subscribe request to a server, and the resource subscribe request includes: a second transaction identity, a service identity, and an attribute identity. The resource subscribe request is used to request to subscribe to a first attribute of a first service; the second transaction identity is used to identify the resource subscribe request; the service identity is used to identify the first service; and the attribute identity is used to identify the first attribute. In embodiments of the present disclosure, the first attribute is an array attribute of the first service.

In step 420, the server establishes a monitoring mechanism in a case where the client has a subscription permission. The monitoring mechanism is used to monitor the first attribute of the first service. After receiving the resource subscribe request from the client, the server first determines whether the client has the subscription permission for the first attribute of the first service, and establishes the monitoring mechanism in the case where the client has the subscription permission for the first attribute of the first service.

In step 430, the server sends a resource subscribe response to the client, and the resource subscribe response includes: a response code, a third transaction identity, the service identity, and the attribute identity. The resource subscribe response is used to indicate that the client has successfully subscribed to the first attribute of the first service; the response code is used to identify the resource subscribe response; and the third transaction identity is used to identify a relationship between the resource subscribe response and the resource subscribe request. The server sends the resource subscribe response to the client in the case where the client has the subscription permission for the first attribute of the first service. Optionally, the resource subscribe response further includes: an attribute value, and an information version identity. The attribute value is used to indicate a value of the first attribute; and the information version identity is used to indicate a version of the first attribute of the first service.

In step 440, the server sends resource change information to the client, and the resource change information includes at least one of: a first transaction identity, the service identity, the attribute identity, the information version identity, the attribute change type, an element original identity, an element change identity, or an element change value. The resource change information is used to indicate a change of a first element in the first attribute of the first service, and the first element is an element that changes among the elements of the first attribute; the first transaction identity is used to identify a relationship between the resource change information and the resource subscribe request; the attribute change type is used to indicate a change type of the first attribute; the element original identity is used to indicate an identity of the first element before the change of the first attribute; the element change identity is used to indicate an identity of the first element after the change of the first attribute; and the element change value is used to indicate a value of the first element after the change of the first attribute.

In step 450, the client updates the first attribute of the first service based on the resource change information. After receiving the resource change information, the client may obtain the attribute change type from the resource change information, and accordingly update the first attribute based on the attribute change type.

Regarding the content that is not described in detail in the embodiment of FIG. 4, reference may be made to the above embodiments, and details will not be repeated here.

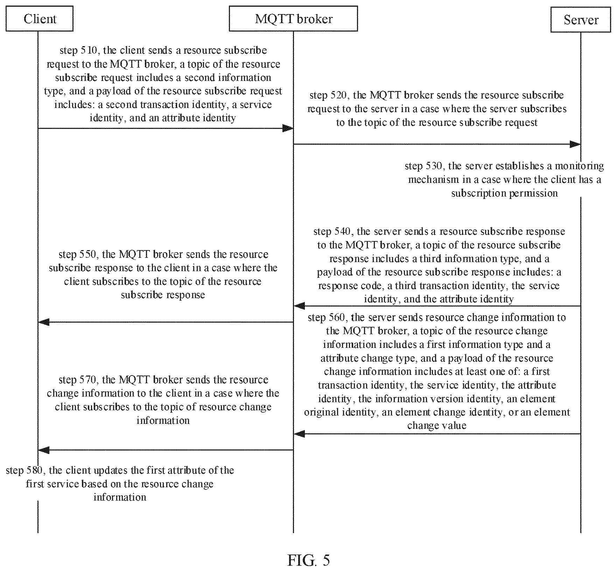

Referring to FIG. 5, which shows a flowchart of a method for transmitting information provided by yet another embodiment of the present disclosure, the method can be applied to the resource subscription system shown in FIG. 1. As shown in FIG. 5, the method for transmitting the information includes at least some of the following steps.

In step 510, a client sends a resource subscribe request to a MQTT broker, a topic of the resource subscribe request includes a second information type, and a payload of the resource subscribe request includes: a second transaction identity, a service identity, and an attribute identity. The second information type is used to indicate that transmitted information is the resource subscribe request; the resource subscribe request is used to request to subscribe to a first attribute of a first service; the second transaction identity is used to identify the resource subscribe request; the service identity is used to identify the first service; and the attribute identity is used to identify the first attribute. In embodiments of the present disclosure, the first attribute is an array attribute of the first service.

In step 520, the MQTT broker sends the resource subscribe request to a server in a case where the server subscribes to the topic of the resource subscribe request.

In step 530, the server establishes a monitoring mechanism in a case where the client has a subscription permission. The monitoring mechanism is used to monitor the first attribute of the first service. After receiving the resource subscribe request from the client, the server first determines whether the client has the subscription permission for the first attribute of the first service, and establishes the monitoring mechanism in the case where the client has the subscription permission for the first attribute of the first service.

In step 540, the server sends a resource subscribe response to the MQTT broker, a topic of the resource subscribe response includes a third information type, and a payload of the resource subscribe response includes: a response code, a third transaction identity, the service identity, and the attribute identity. The resource subscribe response is used to indicate that the client has successfully subscribed to the first attribute of the first service; the third information type is used to indicate that transmitted information is the resource subscribe response; the response code is used to identify the resource subscribe response; and the third transaction identity is used to identify a relationship between the resource subscribe response and the resource subscribe request. The server sends the resource subscribe response to the MQTT broker in the case where the client has the subscription permission for the first attribute of the first service. Optionally, the resource subscribe response further includes: an attribute value, and an information version identity. The attribute value is used to indicate a value of the first attribute; and the information version identity is used to indicate a version of the first attribute of the first service.

In step 550, the MQTT broker sends the resource subscribe response to the client in a case where the client subscribes to the topic of the resource subscribe response.

In step 560, the server sends resource change information to the MQTT broker, a topic of the resource change information includes a first information type and an attribute change type, and a payload of the resource change information includes at least one of: a first transaction identity, the service identity, the attribute identity, the information version identity, an element original identity, an element change identity, or an element change value. The resource change information is used to indicate a change of a first element in the first attribute of the first service, and the first element is an element that changes among the at least one element of the first attribute; the first information type is used to indicate transmitted information is the resource change information; the attribute change type is used to indicate a change type of the first attribute; the first transaction identity is used to identify a relationship between the resource change information and the resource subscribe request; the element original identity is used to indicate an identity of the first element before the change of the first attribute; the element change identity is used to indicate an identity of the first element after the change of the first attribute; and the element change value is used to indicate a value of the first element after the change of the first attribute.

In step 570, the MQTT broker sends the resource change information to the client in a case where the client subscribes to the topic of resource change information.

In step 580, the client updates the first attribute of the first service based on the resource change information. After receiving the resource change information, the client may obtain the attribute change type from the resource change information, and accordingly update the first attribute based on the attribute change type.

Regarding the content that is not described in detail in the embodiment of FIG. 5, reference may be made to the above embodiments, and details will not be repeated here.

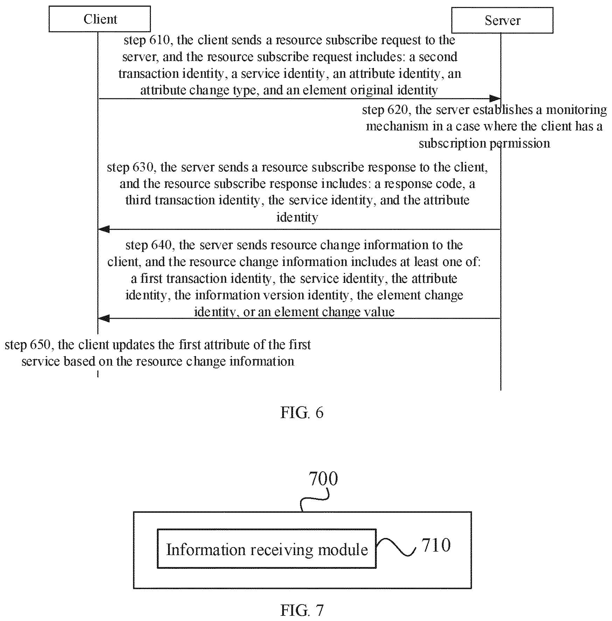

Referring to FIG. 6, which shows a flowchart of a method for transmitting information provided by still another embodiment of the present disclosure, the method can be applied to the resource subscription system shown in FIG. 1. As shown in FIG. 6, the method for transmitting the information includes at least some of the following steps.

In step 610, a client sends a resource subscribe request to a server, and the resource subscribe request includes: a second transaction identity, a service identity, an attribute identity, an attribute change type, and an element original identity. The resource subscribe request is used to request to subscribe to a first attribute of a first service; the second transaction identity is used to identify the resource subscribe request; the service identity is used to identify the first service; the attribute identity is used to identify the first attribute; the attribute change type is used to indicate a change type of the first attribute; and the element original identity is used to indicate an identity of the first element before the change of the first attribute. In embodiments of the present disclosure, the first attribute is an array attribute of the first service.

In step 620, the server establishes a monitoring mechanism in a case where the client has a subscription permission. The monitoring mechanism is used to monitor the first attribute of the first service. After receiving the resource subscribe request from the client, the server first determines whether the client has the subscription permission for the first attribute of the first service, and establishes the monitoring mechanism in the case where the client has the subscription permission for the first attribute of the first service.

In step 630, the server sends a resource subscribe response to the client, and the resource subscribe response includes: a response code, a third transaction identity, the service identity, and the attribute identity. The resource subscribe response is used to indicate that the client has successfully subscribed to the first attribute of the first service; the response code is used to identify the resource subscribe response; and the third transaction identity is used to identify a relationship between the resource subscribe response and the resource subscribe request. The server sends the resource subscribe response to the client in the case where the client has the subscription permission for the first attribute of the first service. Optionally, the resource subscribe response further includes: an attribute value, and an information version identity. The attribute value is used to indicate a value of the first attribute; and the information version identity is used to indicate a version of the first attribute of the first service.

In step 640, the server sends resource change information to the client, and the resource change information includes at least one of: a first transaction identity, the service identity, the attribute identity, the information version identity, the element change identity, or an element change value. The resource change information is used to indicate a change of a first element in the first attribute of the first service, and the first element is an element that changes among the elements of the first attribute; the first transaction identity is used to identify a relationship between the resource change information and the resource subscribe request; the element change identity is used to indicate an identity of the first element after the change of the first attribute; and the element change value is used to indicate a value of the first element after the change of the first attribute.

In step 650, the client updates the first attribute of the first service based on the resource change information. After receiving the resource change information, the client may accordingly update the first attribute based on the attribute change type and the element original identity it subscribes to.

Regarding the content that is not described in detail in the embodiment of FIG. 6, reference may be made to the above embodiments, and details will not be repeated here.

It should be noted that embodiments of the present disclosure describe the method for transmitting the information provided in the present disclosure from the perspective of interactions between the client and the server. The above-mentioned steps performed by the client may be separately implemented as a method for transmitting information on the client side; and the above-mentioned steps performed by the server may be separately implemented as a method for transmitting information on the server side.

The following are apparatus embodiments of the present disclosure, which can be used to implement method embodiments of the present disclosure. For details not disclosed in the apparatus embodiments of the present disclosure, reference may be made to the method embodiments of the present disclosure.

Referring to FIG. 7, which shows a block diagram of an apparatus for transmitting information provided by an embodiment of the present disclosure, the apparatus has a function of implementing the above method examples on the client side, and the function may be implemented by means of hardware, or may be implemented by means of executing corresponding software by hardware. The apparatus may be the electronic device 12 described above, or may be provided in the electronic device 12. As shown in FIG. 7, the apparatus 700 may include: an information receiving module 710.

The information receiving module 710 is configured to receive resource change information from a server, and the resource change information is used to indicate a change of a first element in a first attribute of a first service, the first attribute is an array attribute of the first service, and the first element is an element of the first attribute that has changed.

In an example, the resource change information includes at least one of: an attribute change type, used to indicate a change type of the first attribute; an element original identity, used to indicate an identity of the first element before the change of the first attribute; an element change identity, used to indicate an identity of the first element after the change of the first attribute; or an element change value, used to indicate a value of the first element after the change of the first attribute.

In an example, the attribute change type includes any one of: an added type, including adding the first element to at least one element of the first attribute; a removed type, including removing the first element from the at least one element of the first attribute; a modify type, including modifying the first element in the at least one element of the first attribute; or a replace type, including replacing a third element with a second element in the at least one element of the first attribute, and the first element includes the second element and the third element.

In an example, the attribute change type includes the add type, and the resource change information includes the attribute change type, the element change identity, and the element change value.

In an example, the attribute change type includes the remove type, and the resource change information includes the attribute change type and the element original identity.

In an example, the attribute change type includes the modify type, and the resource change information includes the attribute change type, the element original identity, and the element change value.

In an example, the attribute change type includes the replace type, and the resource change information includes the attribute change type, the element original identity, the element change identity, and the element change value.

In an example, the resource change information further includes at least one of: a first transaction identity, used to identify a relationship between the resource change information and a resource subscribe request; an information version identity, used to identify a version of the first attribute of the first service; a service identity, used to identify the first service; or an attribute identity, used to identify the first attribute.

In an example, the resource change information complies with a MQTT protocol.

In an example, a topic of the resource change information includes at least one of: a first information type, used to indicate that transmitted information is the resource change information; the first transaction identity, used to identify the relationship between the resource change information and the resource subscribe request; the information version identity, used to identify the version of the first attribute of the first service; the attribute change type, used to indicate the change type of the first attribute; the service identity, used to identify the first service; or the attribute identity, used to identify the first attribute.

In an example, a payload of the resource change information includes at least one of: the first transaction identity, used to identify the relationship between the resource change information and the resource subscribe request; the information version identity, used to identify the version of the first attribute of the first service; the attribute change type, used to indicate the change type of the first attribute; the element original identity, used to indicate the identity of the first element before the change of the first attribute; the element change identity, used to indicate the identity of the first element after the change of the first attribute; the element change value, used to indicate the value of the first element after the change of the first attribute; the service identity, used to identify the first service; or the attribute identity, used to identify the first attribute.

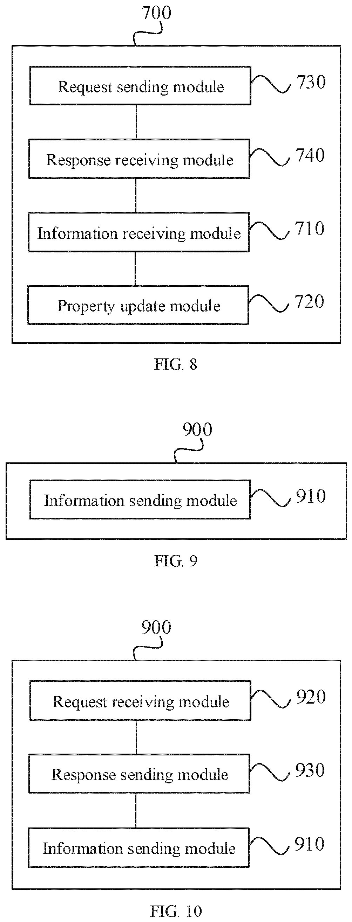

In an example, as shown in FIG. 8, the apparatus 700 further includes: an attribute update module 720, used to update the first attribute of the first service based on the resource change information.

In an example, as shown in FIG. 8, the apparatus 700 further includes: a request sending module 730, configured to send the resource subscribe request to the server, and the resource subscribe request is used to request to subscribe to the first attribute of the first service, and the resource subscribe request includes at least one of: a second transaction identity, used to identify the resource subscribe request; the service identity, used to identify the first service; or the attribute identity, used to identify the first attribute.

In an example, the resource subscribe request further includes at least one of: the attribute change type, used to indicate the change type of the first attribute; or the element original identity, used to indicate the identity of the first element before the change of the first attribute.

In an example, the resource subscribe request complies with the MQTT protocol.

In an example, a topic of the resource subscribe request includes at least one of: a second information type, the attribute change type, the element original identity, the second transaction identity, the service identity, or the attribute identity; and the second information type is used to indicate that transmitted information is the resource subscribe request; the attribute change type is used to indicate the change type of the first attribute; and the element original identity is used to indicate the identity of the first element before the change of the first attribute.

In an example, a payload of the resource subscribe request includes at least one of: the attribute change type, the element original identity, the second transaction identity, the service identity, or the attribute identity; and the attribute change type is used to indicate the change type of the first attribute; and the element original identity is used to indicate the identity of the first element before the change of the first attribute.

In an example, as shown in FIG. 8, the apparatus 700 further includes: a response receiving module 740, configured to receive a resource subscribe response from the server, and the resource subscribe response is used to indicate that the first attribute of the first service is successfully subscribed by the client, and the resource subscribe response includes at least one of: a response code, used to identify the resource subscribe response; a third transaction identity, used to identify a relationship between the resource subscribe response and the resource subscribe request; the service identity, used to identify the first service; or the attribute identity, used to identify the first attribute.

In an example, the resource subscribe response further includes at least one of: an attribute value, used to indicate a value of the first attribute; or the information version identity, used to identify the version of the first attribute of the first service.

In an example, the resource subscribe response complies with the MQTT protocol.

In an example, a topic of the resource subscribe response includes at least one of: a third information type, the response code, the third transaction identity, the service identity, the attribute identity, or the information version identity; and the third information type is used to indicate that transmitted information is the resource subscribe response; and the information version identity is used to identify the version of the first attribute of the first service.

In an example, a payload of the resource subscribe response includes at least one of: the response code, the third transaction identity, the service identity, the attribute identity, the attribute value, or the information version identity; and the attribute value is used to indicate the value of the first attribute; and the information version identity is used to identify the version of the first attribute of the first service.

To sum up, according to the technical solutions provided by embodiments of the present disclosure, when the array-type resource subscribed by the client changes, the server pushes the changed part of the resource to the client, so as to avoid repeatedly pushing the unchanged part of the resource to the client. It is because the server only pushes the changed part of the resource when the array-type resource changes, the client can clearly determine the changed part of the resource without spending a lot of processing resources, which reduces the processing overhead of the client and saves the processing resource of the client, and also saves the network transmission resources and realizes better adaptation to the subscription and pushing of a complex type of resource.

Referring to FIG. 9, which shows a block diagram of an apparatus for transmitting information provided by an embodiment of the present disclosure, the apparatus has a function of implementing the above method examples on the server side, and the function may be implemented by means of hardware, or may be implemented by means of executing corresponding software by hardware. The apparatus may be the electronic device 14 described above, or may be provided in the electronic device 14. As shown in FIG. 9, the apparatus 900 may include: an information sending module 910.

The information sending module 910 is configured to send resource change information to a client, and the resource change information is used to indicate a change of a first element in a first attribute of a first service, the first attribute is an array attribute of the first service, and the first element is an element of the first attribute that has changed.

In an example, the resource change information includes at least one of: an attribute change type, used to indicate a change type of the first attribute; an element original identity, used to indicate an identity of the first element before the change of the first attribute; an element change identity, used to indicate an identity of the first element after the change of the first attribute; or an element change value, used to indicate a value of the first element after the change of the first attribute.

In an example, the attribute change type includes any one of: an add type, including adding the first element to at least one element of the first attribute; a remove type, including removing the first element from the at least one element of the first attribute; a modify type, including modifying the first element in the at least one element of the first attribute; or a replace type, including replacing a third element with a second element in the at least one element of the first attribute, and the first element includes the second element and the third element.

In an example, the attribute change type includes the add type, and the resource change information includes the attribute change type, the element change identity, and the element change value.

In an example, the attribute change type includes the remove type, and the resource change information includes the attribute change type and the element original identity.

In an example, the attribute change type includes the modify type, and the resource change information includes the attribute change type, the element original identity, and the element change value.

In an example, the attribute change type includes the replace type, and the resource change information includes the attribute change type, the element original identity, the element change identity, and the element change value.

In an example, the resource change information further includes at least one of: a first transaction identity, used to identify a relationship between the resource change information and a resource subscribe request; an information version identity, used to identify a version of the first attribute of the first service; a service identity, used to identify the first service; or an attribute identity, used to identify the first attribute.

In an example, the resource change information complies with a MQTT protocol.

In an example, a topic of the resource change information includes at least one of: a first information type, used to indicate that transmitted information is the resource change information; the first transaction identity, used to identify the relationship between the resource change information and the resource subscribe request; the information version identity, used to identify the version of the first attribute of the first service; the attribute change type, used to indicate the change type of the first attribute; the service identity, used to identify the first service; or the attribute identity, used to identify the first attribute.

In an example, a payload of the resource change information includes at least one of: the first transaction identity, used to identify the relationship between the resource change information and the resource subscribe request; the information version identity, used to identify the version of the first attribute of the first service; the attribute change type, used to indicate the change type of the first attribute; the element original identity, used to indicate the identity of the first element before the change of the first attribute; the element change identity, used to indicate the identity of the first element after the change of the first attribute; the element change value, used to indicate the value of the first element after the change of the first attribute; the service identity, used to identify the first service; or the attribute identity, used to identify the first attribute.

In an example, as shown in FIG. 10, the apparatus 900 further includes: a request receiving module 920, configured to receive the resource subscribe request from the client, and the resource subscribe request is used to request to subscribe to the first attribute of the first service, and the resource subscribe request includes at least one of: a second transaction identity, used to identify the resource subscribe request; the service identity, used to identify the first service; or the attribute identity, used to identify the first attribute.

In an example, the resource subscribe request further includes at least one of: the attribute change type, used to indicate the change type of the first attribute; or the element original identity, used to indicate the identity of the first element before the change of the first attribute.

In an example, the resource subscribe request complies with the MQTT protocol.

In an example, a topic of the resource subscribe request includes at least one of: a second information type, the attribute change type, the element original identity, the second transaction identity, the service identity, or the attribute identity; and the second information type is used to indicate that transmitted information is the resource subscribe request; the attribute change type is used to indicate the change type of the first attribute; and the element original identity is used to indicate the identity of the first element before the change of the first attribute.

In an example, a payload of the resource subscribe request includes at least one of: the attribute change type, the element original identity, the second transaction identity, the service identity, or the attribute identity; and the attribute change type is used to indicate the change type of the first attribute; and the element original identity is used to indicate the identity of the first element before the change of the first attribute.

In an example, as shown in FIG. 10, the apparatus 900 further includes: a response sending module 930, configured to send a resource subscribe response to the client, and the resource subscribe response is used to indicate that the first attribute of the first service is successfully subscribed by the client, and the resource subscribe response includes at least one of: a response code, used to identify the resource subscribe response; a third transaction identity, used to identify a relationship between the resource subscribe response and the resource subscribe request; the service identity, used to identify the first service; or the attribute identity, used to identify the first attribute.

In an example, as shown in FIG. 10, the response sending module 930 is configured to send the resource subscribe response to the client in a case where the client has a subscription permission for the first attribute of the first service.

In an example, the resource subscribe response further includes at least one of: an attribute value, used to indicate a value of the first attribute; or the information version identity, used to identify the version of the first attribute of the first service.

In an example, the resource subscribe response complies with the MQTT protocol.

In an example, a topic of the resource subscribe response includes at least one of: a third information type, the response code, the third transaction identity, the service identity, the attribute identity, or the information version identity; and the third information type is used to indicate that transmitted information is the resource subscribe response; and the information version identity is used to identify the version of the first attribute of the first service.

In an example, a payload of the resource subscribe response includes at least one of: the response code, the third transaction identity, the service identity, the attribute identity, the attribute value, or the information version identity; and the attribute value is used to indicate the value of the first attribute; and the information version identity is used to identify the version of the first attribute of the first service.

To sum up, according to the technical solutions provided by embodiments of the present disclosure, when the array-type resource subscribed by the client changes, the server pushes the changed part of the resource to the client, so as to avoid repeatedly pushing the unchanged part of the resource to the client. It is because the server only pushes the changed part of the resource when the array-type resource changes, the client can clearly determine the changed part of the resource without spending a lot of processing resources, which reduces the processing overhead of the client and saves the processing resource of the client, and also saves the network transmission resources and realizes better adaptation to the subscription and pushing of a complex type of resource.

It should be noted that when the apparatus provided by the above embodiments implements its functions, the division of the above functional modules is only provided as an example for illustration. In practical applications, the above function may be implemented by different function modules according to requirements, it means that the internal structure of the apparatus may be divided into different functional modules to implement all or part of the functions described above.

Regarding the apparatus in the foregoing embodiments, a specific manner in which each module executes operations has been described in detail in embodiments related to the method, and will not be described in detail here.

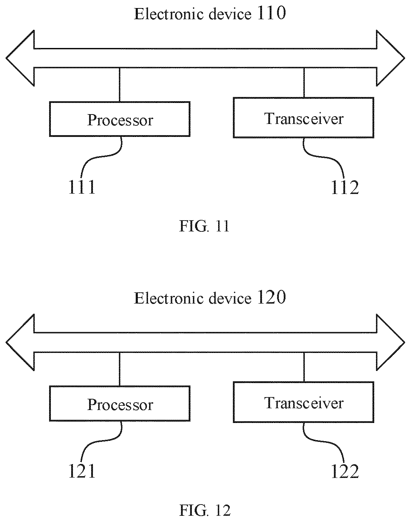

Referring to FIG. 11, which shows a schematic structural diagram of an electronic device 110 provided by an embodiment of the present disclosure. For example, the electronic device can be used to execute the method for transmitting the information on the client side as described above. Specifically, the electronic device 110 may include: a processor 111, and a transceiver 112 connected to the processor 111.

The processor 111 includes one or more processing cores, and the processor 111 performs various functional applications and information processing by running a software program and a module.

The transceiver 112 includes a receiver and a transmitter. Optionally, the transceiver 112 is a communication chip.

In an example, the electronic device 110 further includes: a memory and a bus. The memory is connected to the processor via the bus. The memory may be used to store a computer program, and the processor is used to execute the computer program, to implement the various steps performed by the client in the method embodiments described above.

In addition, the memory may be implemented by any type of volatile or non-volatile storage device or a combination thereof. The volatile or non-volatile storage device includes, but not limited to, a Random-Access Memory (RAM) and a Read-Only Memory (ROM), an Erasable Programmable Read-Only Memory (EPROM), an Electrically Erasable Programmable Read-Only Memory (EEPROM), a flash memory or other solid state storage technologies, a Compact Disc Read-Only Memory (CD-ROM), a Digital Video Disc (DVD) or other optical storages, a tape cartridge, a magnetic tape, a disk storage or other magnetic storage devices.

The transceiver 112 is configured to receive resource change information from a server, wherein the resource change information is used to indicate a change of a first element in a first attribute of a first service, the first attribute is an array attribute of the first service, and the first element is an element of the first attribute that has changed.

In an example, the resource change information includes at least one of: an attribute change type, used to indicate a change type of the first attribute; an element original identity, used to indicate an identity of the first element before the change of the first attribute; an element change identity, used to indicate an identity of the first element after the change of the first attribute; or an element change value, used to indicate a value of the first element after the change of the first attribute.

In an example, the attribute change type includes any one of: an add type, including adding the first element to at least one element of the first attribute; a remove type, including removing the first element from the at least one element of the first attribute; a modify type, including modifying the first element in the at least one element of the first attribute; or a replace type, including replacing a third element with a second element in the at least one element of the first attribute, and the first element includes the second element and the third element.

In an example, the attribute change type includes the add type, and the resource change information includes the attribute change type, the element change identity, and the element change value.

In an example, the attribute change type includes the remove type, and the resource change information includes the attribute change type and the element original identity.

In an example, the attribute change type includes the modify type, and the resource change information includes the attribute change type, the element original identity, and the element change value.

In an example, the attribute change type includes the replace type, and the resource change information includes the attribute change type, the element original identity, the element change identity, and the element change value.

In an example, the resource change information further includes at least one of: a first transaction identity, used to identify a relationship between the resource change information and a resource subscribe request; an information version identity, used to identify a version of the first attribute of the first service; a service identity, used to identify the first service; or an attribute identity, used to identify the first attribute.

In an example, the resource change information complies with a MQTT protocol.

In an example, a topic of the resource change information includes at least one of: a first information type, used to indicate that transmitted information is the resource change information; the first transaction identity, used to identify the relationship between the resource change information and the resource subscribe request; the information version identity, used to identify the version of the first attribute of the first service; the attribute change type, used to indicate the change type of the first attribute; the service identity, used to identify the first service; or the attribute identity, used to identify the first attribute.

In an example, a payload of the resource change information includes at least one of: the first transaction identity, used to identify the relationship between the resource change information and the resource subscribe request; the information version identity, used to identify the version of the first attribute of the first service; the attribute change type, used to indicate the change type of the first attribute; the element original identity, used to indicate the identity of the first element before the change of the first attribute; the element change identity, used to indicate the identity of the first element after the change of the first attribute; the element change value, used to indicate the value of the first element after the change of the first attribute; the service identity, used to identify the first service; or the attribute identity, used to identify the first attribute.

In an example, the processor 111 is used to update the first attribute of the first service based on the resource change information.

In an example, the transceiver 112 is used to send the resource subscribe request to the server, and the resource subscribe request is used to request to subscribe to the first attribute of the first service, and the resource subscribe request includes at least one of: a second transaction identity, used to identify the resource subscribe request; the service identity, used to identify the first service; or the attribute identity, used to identify the first attribute.

In an example, the resource subscribe request further includes at least one of: the attribute change type, used to indicate the change type of the first attribute; or the element original identity, used to indicate the identity of the first element before the change of the first attribute.

In an example, the resource subscribe request complies with the MQTT protocol.

In an example, a topic of the resource subscribe request includes at least one of: a second information type, the attribute change type, the element original identity, the second transaction identity, the service identity, or the attribute identity; the second information type is used to indicate that transmitted information is the resource subscribe request; the attribute change type is used to indicate the change type of the first attribute; and the element original identity is used to indicate the identity of the first element before the change of the first attribute.

In an example, a payload of the resource subscribe request includes at least one of: the attribute change type, the element original identity, the second transaction identity, the service identity, or the attribute identity; and the attribute change type is used to indicate the change type of the first attribute; and the element original identity is used to indicate the identity of the first element before the change of the first attribute.

In an example, the transceiver 112 is used to receive a resource subscribe response from the server, and the resource subscribe response is used to indicate that the first attribute of the first service is successfully subscribed by the client, and the resource subscribe response includes at least one of: a response code, used to identify the resource subscribe response; a third transaction identity, used to identify a relationship between the resource subscribe response and the resource subscribe request; the service identity, used to identify the first service; or the attribute identity, used to identify the first attribute.

In an example, the resource subscribe response further includes at least one of: an attribute value, used to indicate a value of the first attribute; or the information version identity, used to identify the version of the first attribute of the first service.

In an example, the resource subscribe response complies with the MQTT protocol.

In an example, a topic of the resource subscribe response includes at least one of: a third information type, the response code, the third transaction identity, the service identity, the attribute identity, or the information version identity; and the third information type is used to indicate that transmitted information is the resource subscribe response; and the information version identity is used to identify the version of the first attribute of the first service.

In an example, a payload of the resource subscribe response includes at least one of: the response code, the third transaction identity, the service identity, the attribute identity, the attribute value, or the information version identity; and the attribute value is used to indicate the value of the first attribute; and the information version identity is used to identify the version of the first attribute of the first service.

Referring to FIG. 12, which shows a schematic structural diagram of an electronic device 120 provided by an embodiment of the present disclosure. For example, the electronic device can be used to execute the method for transmitting the information on the server side as described above. Specifically, the electronic device 120 may include: a processor 121, and a transceiver 122 connected to the processor 121.

The processor 121 includes one or more processing cores, and the processor 121 performs various functional applications and information processing by running a software program and a module.

The transceiver 122 includes a receiver and a transmitter. Optionally, the transceiver 122 is a communication chip.

In an example, the electronic device 110 further includes: a memory and a bus. The memory is connected to the processor via the bus. The memory may be used to store a computer program, and the processor is used to execute the computer program, to implement the various steps performed by the server in the method embodiments described above.

In addition, the memory may be implemented by any type of volatile or non-volatile storage device or a combination thereof. The volatile or non-volatile storage device includes, but not limited to, a RAM and a ROM, an EPROM, an EEPROM, a flash memory or other solid state storage technologies, a CD-ROM, a DVD or other optical storages, a tape cartridge, a magnetic tape, a disk storage or other magnetic storage devices.

The transceiver 122 is used to send resource change information to a client, wherein the resource change information is used to indicate a change of a first element in a first attribute of a first service, the first attribute is an array attribute of the first service, and the first element is an element of the first attribute that has changed.

In an example, the resource change information includes at least one of: an attribute change type, used to indicate a change type of the first attribute; an element original identity, used to indicate an identity of the first element before the change of the first attribute; an element change identity, used to indicate an identity of the first element after the change of the first attribute; or an element change value, used to indicate a value of the first element after the change of the first attribute.

In an example, the attribute change type includes any one of: an add type, including adding the first element to at least one element of the first attribute; a remove type, including removing the first element from the at least one element of the first attribute; a modify type, including modifying the first element in the at least one element of the first attribute; or a replace type, including replacing a third element with a second element in the at least one element of the first attribute, and the first element includes the second element and the third element.

In an example, the attribute change type includes the add type, and the resource change information includes the attribute change type, the element change identity, and the element change value.

In an example, the attribute change type includes the remove type, and the resource change information includes the attribute change type and the element original identity.

In an example, the attribute change type includes the modify type, and the resource change information includes the attribute change type, the element original identity, and the element change value.

In an example, the attribute change type includes the replace type, and the resource change information includes the attribute change type, the element original identity, the element change identity, and the element change value.

In an example, the resource change information further includes at least one of: a first transaction identity, used to identify a relationship between the resource change information and a resource subscribe request; an information version identity, used to identify a version of the first attribute of the first service; a service identity, used to identify the first service; or a attribute identity, used to identify the first attribute.

In an example, the resource change information complies with a MQTT protocol.

In an example, a topic of the resource change information includes at least one of: a first information type, used to indicate that transmitted information is the resource change information; the first transaction identity, used to identify the relationship between the resource change information and the resource subscribe request; the information version identity, used to identify the version of the first attribute of the first service; the attribute change type, used to indicate the change type of the first attribute; the service identity, used to identify the first service; or the attribute identity, used to identify the first attribute.

In an example, a payload of the resource change information includes at least one of: the first transaction identity, used to identify the relationship between the resource change information and the resource subscribe request; the information version identity, used to identify the version of the first attribute of the first service; the attribute change type, used to indicate the change type of the first attribute; the element original identity, used to indicate the identity of the first element before the change of the first attribute; the element change identity, used to indicate the identity of the first element after the change of the first attribute; the element change value, used to indicate the value of the first element after the change of the first attribute; the service identity, used to identify the first service; or the attribute identity, used to identify the first attribute.

In an example, the transceiver 122 is used to receive the resource subscribe request from the client, and the resource subscribe request is used to request to subscribe to the first attribute of the first service, and the resource subscribe request includes at least one of: a second transaction identity, used to identify the resource subscribe request; the service identity, used to identify the first service; or the attribute identity, used to identify the first attribute.

In an example, the resource subscribe request further includes at least one of: the attribute change type, used to indicate the change type of the first attribute; or the element original identity, used to indicate the identity of the first element before the change of the first attribute.

In an example, the resource subscribe request complies with the MQTT protocol.

In an example, a topic of the resource subscribe request includes at least one of: a second information type, the attribute change type, the element original identity, the second transaction identity, the service identity, or the attribute identity; and the second information type is used to indicate that transmitted information is the resource subscribe request; the attribute change type is used to indicate the change type of the first attribute; and the element original identity is used to indicate the identity of the first element before the change of the first attribute.

In an example, a payload of the resource subscribe request includes at least one of: the attribute change type, the element original identity, the second transaction identity, the service identity, or the attribute identity; and the attribute change type is used to indicate the change type of the first attribute; and the element original identity is used to indicate the identity of the first element before the change of the first attribute.

In an example, the transceiver 122 is used to send a resource subscribe response to the client, and the resource subscribe response is used to indicate that the first attribute of the first service is successfully subscribed by the client, and the resource subscribe response includes at least one of: a response code, used to identify the resource subscribe response; a third transaction identity, used to identify a relationship between the resource subscribe response and the resource subscribe request; the service identity, used to identify the first service; or the attribute identity, used to identify the first attribute.

In an example, the transceiver 122 is used to send the resource subscribe response to the client in a case where the client has a subscription permission for the first attribute of the first service.

In an example, the resource subscribe response further includes at least one of: an attribute value, used to indicate a value of the first attribute; or the information version identity, used to identify the version of the first attribute of the first service.

In an example, the resource subscribe response complies with the MQTT protocol.

In an example, a topic of the resource subscribe response includes at least one of: a third information type, the response code, the third transaction identity, the service identity, the attribute identity, or the information version identity; and the third information type is used to indicate that transmitted information is the resource subscribe response; and the information version identity is used to identify the version of the first attribute of the first service.

In an example, a payload of the resource subscribe response includes at least one of: the response code, the third transaction identity, the service identity, the attribute identity, the attribute value, or the information version identity; and the attribute value is used to indicate the value of the first attribute; and the information version identity is used to identify the version of the first attribute of the first service.

Embodiments of the present disclosure further provide a computer-readable storage medium having a computer program stored thereon, and the computer program is configured to be executed by a processor of an electronic device to implement the method for transmitting the information on the client side as described above.

Embodiments of the present disclosure further provide a computer-readable storage medium having a computer program stored thereon, and the computer program is configured to be executed by a processor of an electronic device to implement the method for transmitting the information on the server side as described above.

Embodiments of the present disclosure further provide a chip, including a programmable logic circuit and/or program instructions, and the chip is configured to, when running on an electronic device, implement the method for transmitting the information on the client side as described above.

Embodiments of the present disclosure further provide a chip, including a programmable logic circuit and/or program instructions, and the chip is configured to, when running on an electronic device, implement the method for transmitting the information on the server side as described above.

Embodiments of the present disclosure further provide a computer program product, which is configured to, when running on an electronic device, implement the method for transmitting the information on the client side as described above.

Embodiments of the present disclosure further provide a computer program product, which is configured to, when running on an electronic device, implement the method for transmitting the information on the server side as described above.

Persons of ordinary skill in the art may be aware of that, in one or more of the above examples, the functions described in the embodiments of the present disclosure may be implemented by hardware, software, firmware, or any combination thereof. When implemented using software, the functions may be stored in a computer-readable medium or transmitted as one or more instructions or codes on a computer-readable medium. The computer-readable medium includes a computer storage medium and a communication medium, where the communication medium includes any medium that facilitates the transmission of a computer program from one place to another. The storage medium may be any available medium that can be accessed by a general computer or a special computer.

The foregoing descriptions provide only illustrative embodiments of the present disclosure and are not intended to limit the present disclosure. Any modification, equivalent substitution, improvement and others that are made within the spirit and principle of the present disclosure shall be included in the protection scope of the present disclosure.

## Claims

1. A method for transmitting information, performed by a client, and the method comprising:
receiving resource change information from a server, wherein the resource change information is used to indicate a change of a first element in a first attribute of a first service, the first attribute is an array attribute of the first service, and the first element is an element of the first attribute that has changed.

2. The method according to claim 1, wherein the resource change information comprises at least one of:
an attribute change type, used to indicate a change type of the first attribute;
an element original identity, used to indicate an identity of the first element before the change of the first attribute;
an element change identity, used to indicate an identity of the first element after the change of the first attribute; or
an element change value, used to indicate a value of the first element after the change of the first attribute.

3. The method according to claim 2, wherein the attribute change type comprises any one of:
an add type, comprising adding the first element to the at least one element of the first attribute;
a remove type, comprising removing the first element from the at least one element of the first attribute;
a modify type, comprising modifying the first element in the at least one element of the first attribute; or
a replace type, comprising replacing a third element with a second element in the at least one element of the first attribute, wherein the first element comprises the second element and the third element.

4. The method according to claim 2 or 3, wherein the attribute change type comprises the add type, and the resource change information comprises the attribute change type, the element change identity, and the element change value.

5. The method according to claim 2 or 3, wherein the attribute change type comprises the remove type, and the resource change information comprises the attribute change type and the element original identity.

6. The method according to claim 2 or 3, wherein the attribute change type comprises the modify type, and the resource change information comprises the attribute change type, the element original identity, and the element change value.

7. The method according to claim 2 or 3, wherein the attribute change type comprises the replace type, and the resource change information comprises the attribute change type, the element original identity, the element change identity, and the element change value.

8. The method according to any one of claims 2 to 7, wherein the resource change information further comprises at least one of:
a first transaction identity, used to identify a relationship between the resource change information and a resource subscribe request;
an information version identity, used to identify a version of the first attribute of the first service;
a service identity, used to identify the first service; or
an attribute identity, used to identify the first attribute.

9. The method according to any one of claims 1 to 8, wherein the resource change information complies with a Message Queuing Telemetry Transport (MQTT) protocol.

10. The method according to claim 9, wherein a topic of the resource change information comprises at least one of:
a first information type, used to indicate that transmitted information is the resource change information;
a first transaction identity, used to identify a relationship between the resource change information and a resource subscribe request;
an information version identity, used to identify a version of the first attribute of the first service;
an attribute change type, used to indicate a change type of the first attribute;
a service identity, used to identify the first service; or
an attribute identity, used to identify the first attribute.

11. The method according to claim 9, wherein a payload of the resource change information comprises at least one of:
a first transaction identity, used to identify a relationship between the resource change information and a resource subscribe request;
an information version identity, used to identify a version of the first attribute of the first service;
an attribute change type, used to indicate a change type of the first attribute;
an element original identity, used to indicate an identity of the first element before the change of the first attribute;
an element change identity, used to indicate an identity of the first element after the change of the first attribute;
an element change value, used to indicate a value of the first element after the change of the first attribute;
a service identity, used to identify the first service; or
an attribute identity, used to identify the first attribute.

12. The method according to any one of claims 1 to 11, wherein after the receiving the resource change information from the server, the method further comprises:
updating the first attribute of the first service based on the resource change information.

13. The method according to any one of claims 1 to 12, wherein before the receiving the resource change information from the server, the method further comprises:
sending a resource subscribe request to the server, wherein the resource subscribe request is used to request to subscribe to the first attribute of the first service, and the resource subscribe request comprises at least one of:
a second transaction identity, used to identify the resource subscribe request;
a service identity, used to identify the first service; or
an attribute identity, used to identify the first attribute.

14. The method according to claim 13, wherein the resource subscribe request further comprises at least one of:
an attribute change type, used to indicate a change type of the first attribute; or
an element original identity, used to indicate an identity of the first element before the change of the first attribute.

15. The method according to claim 13 or 14, wherein the resource subscribe request complies with a MQTT protocol.

16. The method according to claim 15, wherein a topic of the resource subscribe request comprises at least one of: a second information type, an attribute change type, an element original identity, the second transaction identity, the service identity, or the attribute identity; and
wherein the second information type is used to indicate that transmitted information is the resource subscribe request; the attribute change type is used to indicate a change type of the first attribute; and the element original identity is used to indicate an identity of the first element before the change of the first attribute.

17. The method according to claim 15, wherein a payload of the resource subscribe request comprises at least one of: an attribute change type, an element original identity, the second transaction identity, the service identity, or the attribute identity; and
wherein the attribute change type is used to indicate a change type of the first attribute; and the element original identity is used to indicate an identity of the first element before the change of the first attribute.

18. The method according to any one of claims 13 to 17, wherein after the sending the resource subscribe request to the server, the method further comprises:
receiving a resource subscribe response from the server, wherein the resource subscribe response is used to indicate that the first attribute of the first service is successfully subscribed by the client, and the resource subscribe response comprises at least one of:
a response code, used to identify the resource subscribe response;
a third transaction identity, used to identify a relationship between the resource subscribe response and the resource subscribe request;
the service identity, used to identify the first service; or
the attribute identity, used to identify the first attribute.

19. The method according to claim 18, wherein the resource subscribe response further comprises at least one of:
an attribute value, used to indicate a value of the first attribute; or
an information version identity, used to identify a version of the first attribute of the first service.

20. The method according to claim 18 or 19, wherein the resource subscribe response complies with a MQTT protocol.

21. The method according to claim 20, wherein a topic of the resource subscribe response comprises at least one of: a third information type, the response code, the third transaction identity, the service identity, the attribute identity, or the information version identity; and
wherein the third information type is used to indicate that transmitted information is the resource subscribe response; and the information version identity is used to identify a version of the first attribute of the first service.

22. The method according to claim 20, wherein a payload of the resource subscribe response comprises at least one of: the response code, the third transaction identity, the service identity, the attribute identity, the attribute value, or the information version identity; and
wherein the attribute value is used to indicate the value of the first attribute; and the information version identity is used to identify the version of the first attribute of the first service.

23. A method for transmitting information, performed by a server, and the method comprising:
sending resource change information to a client, wherein the resource change information is used to indicate a change of a first element in a first attribute of a first service, the first attribute is an array attribute of the first service, and the first element is an element of the first attribute that has changed.

24. The method according to claim 23, wherein the resource change information comprises at least one of:
an attribute change type, used to indicate a change type of the first attribute;
an element original identity, used to indicate an identity of the first element before the change of the first attribute;
an element change identity, used to indicate an identity of the first element after the change of the first attribute; or
an element change value, used to indicate a value of the first element after the change of the first attribute.

25. The method according to claim 24, wherein the attribute change type comprises any one of:
an add type, comprising adding the first element to the at least one element of the first attribute;
a remove type, comprising removing the first element from the at least one element of the first attribute;
a modify type, comprising modifying the first element in the at least one element of the first attribute; or
a replace type, comprising replacing a third element with a second element in the at least one element of the first attribute, wherein the first element comprises the second element and the third element.

26. The method according to claim 24 or 25, wherein the attribute change type comprises the add type, and the resource change information comprises the attribute change type, the element change identity, and the element change value.

27. The method according to claim 24 or 25, wherein the attribute change type comprises the remove type, and the resource change information comprises the attribute change type and the element original identity.

28. The method according to claim 24 or 25, wherein the attribute change type comprises the modify type, and the resource change information comprises the attribute change type, the element original identity, and the element change value.

29. The method according to claim 24 or 25, wherein the attribute change type comprises the replace type, and the resource change information comprises the attribute change type, the element original identity, the element change identity, and the element change value.

30. The method according to any one of claims 24 to 29, wherein the resource change information further comprises at least one of:
a first transaction identity, used to identify a relationship between the resource change information and a resource subscribe request;
an information version identity, used to identify a version of the first attribute of the first service;
a service identity, used to identify the first service; or
an attribute identity, used to identify the first attribute.

31. The method according to any one of claims 23 to 30, wherein the resource change information complies with a Message Queuing Telemetry Transport (MQTT) protocol.

32. The method according to claim 31, wherein a topic of the resource change information comprises at least one of:
a first information type, used to indicate that transmitted information is the resource change information;
a first transaction identity, used to identify a relationship between the resource change information and a resource subscribe request;
an information version identity, used to identify a version of the first attribute of the first service;
an attribute change type, used to indicate a change type of the first attribute;
a service identity, used to identify the first service; or
an attribute identity, used to identify the first attribute.

33. The method according to claim 31, wherein a payload of the resource change information comprises at least one of:
a first transaction identity, used to identify a relationship between the resource change information and a resource subscribe request;
an information version identity, used to identify a version of the first attribute of the first service;
an attribute change type, used to indicate a change type of the first attribute;
an element original identity, used to indicate an identity of the first element before the change of the first attribute;
an element change identity, used to indicate an identity of the first element after the change of the first attribute;
an element change value, used to indicate a value of the first element after the change of the first attribute;
a service identity, used to identify the first service; or
an attribute identity, used to identify the first attribute.

34. The method according to any one of claims 23 to 33, wherein before the sending the resource change information to the client, the method further comprises:
receiving the resource subscribe request from the client, wherein the resource subscribe request is used to request to subscribe to the first attribute of the first service, and the resource subscribe request comprises at least one of:
a second transaction identity, used to identify the resource subscribe request;
a service identity, used to identify the first service; or
an attribute identity, used to identify the first attribute.

35. The method according to claim 34, wherein the resource subscribe request further comprises at least one of:
an attribute change type, used to indicate a change type of the first attribute; or
an element original identity, used to indicate an identity of the first element before the change of the first attribute.

36. The method according to claim 34 or 35, wherein the resource subscribe request complies with a MQTT protocol.

37. The method according to claim 36, wherein a topic of the resource subscribe request comprises at least one of: a second information type, an attribute change type, an element original identity, the second transaction identity, the service identity, or the attribute identity; and
wherein the second information type is used to indicate that transmitted information is the resource subscribe request; the attribute change type is used to indicate a change type of the first attribute; and the element original identity is used to indicate an identity of the first element before the change of the first attribute.

38. The method according to claim 36, wherein a payload of the resource subscribe request comprises at least one of: an attribute change type, an element original identity, the second transaction identity, the service identity, or the attribute identity; and
wherein the attribute change type is used to indicate a change type of the first attribute; and the element original identity is used to indicate an identity of the first element before the change of the first attribute.

39. The method according to any one of claims 34 to 38, wherein after the receiving the resource subscribe request from the client, the method further comprises:
sending a resource subscribe response to the client, wherein the resource subscribe response is used to indicate that the first attribute of the first service is successfully subscribed by the client, and the resource subscribe response comprises at least one of:
a response code, used to identify the resource subscribe response;
a third transaction identity, used to identify a relationship between the resource subscribe response and the resource subscribe request;
a service identity, used to identify the first service; or
an attribute identity, used to identify the first attribute.

40. The method according to claim 39, wherein the sending the resource subscribe response to the client comprises:
sending the resource subscribe response to the client in a case where the client has a subscription permission for the first attribute of the first service.

41. The method according to claim 39 or 40, wherein the resource subscribe response further comprises at least one of:
an attribute value, used to indicate a value of the first attribute; or
an information version identity, used to identify a version of the first attribute of the first service.

42. The method according to any one of claims 39 to 41, wherein the resource subscribe response complies with a MQTT protocol.

43. The method according to claim 42, wherein a topic of the resource subscribe response comprises at least one of: a third information type, the response code, the third transaction identity, the service identity, the attribute identity, or the information version identity; and
wherein the third information type is used to indicate that transmitted information is the resource subscribe response; and the information version identity is used to identify a version of the first attribute of the first service.

44. The method according to claim 42, wherein a payload of the resource subscribe response comprises at least one of: the response code, the third transaction identity, the service identity, the attribute identity, an attribute value, or an information version identity; and
wherein the attribute value is used to indicate a value of the first attribute; and the information version identity is used to identify an version of the first attribute of the first service.

45. An apparatus for transmitting information, provided in an electronic device, and the apparatus comprising:
an information receiving module, configured to receive resource change information from a server, wherein the resource change information is used to indicate a change of a first element in a first attribute of a first service, the first attribute is an array attribute of the first service, and the first element is an element of the first attribute that has changed.

46. The apparatus according to claim 45, wherein the resource change information comprises at least one of:
an attribute change type, used to indicate a change type of the first attribute;
an element original identity, used to indicate an identity of the first element before the change of the first attribute;
an element change identity, used to indicate an identity of the first element after the change of the first attribute; or
an element change value, used to indicate a value of the first element after the change of the first attribute.

47. The apparatus according to claim 46, wherein the attribute change type comprises any one of:
an add type, comprising adding the first element to the at least one element of the first attribute;
a remove type, comprising removing the first element from the at least one element of the first attribute;
a modify type, comprising modifying the first element in the at least one element of the first attribute; or
a replace type, comprising replacing a third element with a second element in the at least one element of the first attribute, wherein the first element comprises the second element and the third element.

48. The apparatus according to claim 46 or 47, wherein the attribute change type comprises the add type, and the resource change information comprises the attribute change type, the element change identity, and the element change value.

49. The apparatus according to claim 46 or 47, wherein the attribute change type comprises the remove type, and the resource change information comprises the attribute change type and the element original identity.

50. The apparatus according to claim 46 or 47, wherein the attribute change type comprises the modify type, and the resource change information comprises the attribute change type, the element original identity, and the element change value.

51. The apparatus according to claim 46 or 47, wherein the attribute change type comprises the replace type, and the resource change information comprises the attribute change type, the element original identity, the element change identity, and the element change value.

52. The apparatus according to any one of claims 46 to 51, wherein the resource change information further comprises at least one of:
a first transaction identity, used to identify a relationship between the resource change information and a resource subscribe request;
an information version identity, used to identify a version of the first attribute of the first service;
a service identity, used to identify the first service; or
an attribute identity, used to identify the first attribute.

53. The apparatus according to any one of claims 45 to 52, wherein the resource change information complies with a Message Queuing Telemetry Transport (MQTT) protocol.

54. The apparatus according to claim 53, wherein a topic of the resource change information comprises at least one of:
a first information type, used to indicate that transmitted information is the resource change information;
a first transaction identity, used to identify a relationship between the resource change information and a resource subscribe request;
an information version identity, used to identify a version of the first attribute of the first service;
an attribute change type, used to indicate a change type of the first attribute;
a service identity, used to identify the first service; or
an attribute identity, used to identify the first attribute.

55. The apparatus according to claim 53, wherein a payload of the resource change information comprises at least one of:
a first transaction identity, used to identify a relationship between the resource change information and a resource subscribe request;
an information version identity, used to identify a version of the first attribute of the first service;
an attribute change type, used to indicate a change type of the first attribute;
an element original identity, used to indicate an identity of the first element before the change of the first attribute;
an element change identity, used to indicate an identity of the first element after the change of the first attribute;
an element change value, used to indicate a value of the first element after the change of the first attribute;
a service identity, used to identify the first service; or
an attribute identity, used to identify the first attribute.

56. The apparatus according to any one of claims 46 to 55, wherein the apparatus further comprises:
an attribute updating module, configured to update the first attribute of the first service based on the resource change information.

57. The apparatus according to any one of claims 46 to 56, wherein the apparatus further comprises:
a request sending module, configured to send a resource subscribe request to the server, wherein the resource subscribe request is used to request to subscribe to the first attribute of the first service, and the resource subscribe request comprises at least one of:
a second transaction identity, used to identify the resource subscribe request;
a service identity, used to identify the first service; or
an attribute identity, used to identify the first attribute.

58. The apparatus according to claim 57, wherein the resource subscribe request further comprises at least one of:
an attribute change type, used to indicate a change type of the first attribute; or
an element original identity, used to indicate an identity of the first element before the change of the first attribute.

59. The apparatus according to claim 57 or 58, wherein the resource subscribe request complies with a MQTT protocol.

60. The apparatus according to claim 59, wherein a topic of the resource subscribe request comprises at least one of: a second information type, an attribute change type, an element original identity, the second transaction identity, the service identity, or the attribute identity; and
wherein the second information type is used to indicate that transmitted information is the resource subscribe request; the attribute change type is used to indicate a change type of the first attribute; and the element original identity is used to indicate an identity of the first element before the change of the first attribute.

61. The apparatus according to claim 59, wherein a payload of the resource subscribe request comprises at least one of: an attribute change type, an element original identity, the second transaction identity, the service identity, or the attribute identity; and
wherein the attribute change type is used to indicate a change type of the first attribute; and the element original identity is used to indicate an identity of the first element before the change of the first attribute.

62. The apparatus according to any one of claims 57 to 61, further comprising:
a response receiving module, configured to receive a resource subscribe response from the server, wherein the resource subscribe response is used to indicate that the first attribute of the first service is successfully subscribed by the client, and the resource subscribe response comprises at least one of:
a response code, used to identify the resource subscribe response;
a third transaction identity, used to identify a relationship between the resource subscribe response and the resource subscribe request;
a service identity, used to identify the first service; or
an attribute identity, used to identify the first attribute.

63. The apparatus according to claim 62, wherein the resource subscribe response further comprises at least one of:
an attribute value, used to indicate a value of the first attribute; or
an information version identity, used to identify a version of the first attribute of the first service.

64. The apparatus according to claim 62 or 63, wherein the resource subscribe response complies with a MQTT protocol.

65. The apparatus according to claim 64, wherein a topic of the resource subscribe response comprises at least one of: a third information type, the response code, the third transaction identity, the service identity, the attribute identity, or an information version identity; and
wherein the third information type is used to indicate that transmitted information is the resource subscribe response; and the information version identity is used to identify a version of the first attribute of the first service.

66. The apparatus according to claim 64, wherein a payload of the resource subscribe response comprises at least one of: the response code, the third transaction identity, the service identity, the attribute identity, an attribute value, or an information version identity; and
wherein the attribute value is used to indicate a value of the first attribute; and the information version identity is used to identify a version of the first attribute of the first service.

67. An apparatus for transmitting information, provided in an electronic device, and the apparatus comprising:
an information sending module, configured to send resource change information to a client, wherein the resource change information is used to indicate a change of a first element in a first attribute of a first service, the first attribute is an array attribute of the first service, and the first element is an element of the first attribute that has changed.

68. The apparatus according to claim 67, wherein the resource change information comprises at least one of:
an attribute change type, used to indicate a change type of the first attribute;
an element original identity, used to indicate an identity of the first element before the change of the first attribute;
an element change identity, used to indicate an identity of the first element after the change of the first attribute; or
an element change value, used to indicate a value of the first element after the change of the first attribute.

69. The apparatus according to claim 68, wherein the attribute change type comprises any one of:
an add type, comprising adding the first element to the at least one element of the first attribute;
a remove type, comprising removing the first element from the at least one element of the first attribute;
a modify type, comprising modifying the first element in the at least one element of the first attribute; or
a replace type, comprising replacing a third element with a second element in the at least one element of the first attribute, wherein the first element comprises the second element and the third element.

70. The apparatus according to claim 68 or 69, wherein the attribute change type comprises the add type, and the resource change information comprises the attribute change type, the element change identity, and the element change value.

71. The apparatus according to claim 68 or 69, wherein the attribute change type comprises the remove type, and the resource change information comprises the attribute change type and the element original identity.

72. The apparatus according to claim 68 or 69, wherein the attribute change type comprises the modify type, and the resource change information comprises the attribute change type, the element original identity, and the element change value.

73. The apparatus according to claim 68 or 69, wherein the attribute change type comprises the replace type, and the resource change information comprises the attribute change type, the element original identity, the element change identity, and the element change value.

74. The apparatus according to any one of claims 68 to 73, wherein the resource change information further comprises at least one of:
a first transaction identity, used to identify a relationship between the resource change information and a resource subscribe request;
an information version identity, used to identify a version of the first attribute of the first service;
a service identity, used to identify the first service; or
an attribute identity, used to identify the first attribute.

75. The apparatus according to any one of claims 67 to 74, wherein the resource change information complies with a Message Queuing Telemetry Transport (MQTT) protocol.

76. The apparatus according to claim 75, wherein a topic of the resource change information comprises at least one of:
a first information type, used to indicate that transmitted information is the resource change information;
a first transaction identity, used to identify a relationship between the resource change information and a resource subscribe request;
an information version identity, used to identify a version of the first attribute of the first service;
an attribute change type, used to indicate a change type of the first attribute;
a service identity, used to identify the first service; or
an attribute identity, used to identify the first attribute.

77. The apparatus according to claim 75, wherein a payload of the resource change information comprises at least one of:
a first transaction identity, used to identify a relationship between the resource change information and a resource subscribe request;
an information version identity, used to identify a version of the first attribute of the first service;
an attribute change type, used to indicate a change type of the first attribute;
an element original identity, used to indicate an identity of the first element before the change of the first attribute;
an element change identity, used to indicate an identity of the first element after the change of the first attribute;
an element change value, used to indicate a value of the first element after the change of the first attribute;
a service identity, used to identify the first service; or
an attribute identity, used to identify the first attribute.

78. The apparatus according to any one of claims 67 to 77, wherein the apparatus further comprises:
a request receiving module, configured to receive a resource subscribe request from the client, wherein the resource subscribe request is used to request to subscribe to the first attribute of the first service, and the resource subscribe request comprises at least one of:
a second transaction identity, used to identify the resource subscribe request;
a service identity, used to identify the first service; or
an attribute identity, used to identify the first attribute.

79. The apparatus according to claim 78, wherein the resource subscribe request further comprises at least one of:
an attribute change type, used to indicate a change type of the first attribute; or
an element original identity, used to indicate an identity of the first element before the change of the first attribute.

80. The apparatus according to claim 78 or 79, wherein the resource subscribe request complies with a MQTT protocol.

81. The apparatus according to claim 80, wherein a topic of the resource subscribe request comprises at least one of: a second information type, an attribute change type, an element original identity, the second transaction identity, the service identity, or the attribute identity; and
wherein the second information type is used to indicate that transmitted information is the resource subscribe request; the attribute change type is used to indicate a change type of the first attribute; and the element original identity is used to indicate an identity of the first element before the change of the first attribute.

82. The apparatus according to claim 80, wherein a payload of the resource subscribe request comprises at least one of: an attribute change type, an element original identity, the second transaction identity, the service identity, or the attribute identity; and
wherein the attribute change type is used to indicate a change type of the first attribute; and the element original identity is used to indicate an identity of the first element before the change of the first attribute.

83. The apparatus according to any one of claims 78 to 82, wherein the apparatus further comprises:
a response sending module, configured to send a resource subscribe response to the client, wherein the resource subscribe response is used to indicate that the first attribute of the first service is successfully subscribed by the client, and the resource subscribe response comprises at least one of:
a response code, used to identify the resource subscribe response;
a third transaction identity, used to identify a relationship between the resource subscribe response and the resource subscribe request;
a service identity, used to identify the first service; or
an attribute identity, used to identify the first attribute.

84. The apparatus according to claim 83, wherein the response sending module is configured to:
send the resource subscribe response to the client in a case where the client has a subscription permission for the first attribute of the first service.

85. The apparatus according to claim 83 or 84, wherein the resource subscribe response further comprises at least one of:
an attribute value, used to indicate a value of the first attribute; or
an information version identity, used to identify a version of the first attribute of the first service.

86. The apparatus according to any one of claims 83 to 85, wherein the resource subscribe response complies with a MQTT protocol.

87. The apparatus according to claim 86, wherein a topic of the resource subscribe response comprises at least one of: a third information type, the response code, the third transaction identity, the service identity, the attribute identity, or an information version identity; and
wherein the third information type is used to indicate that transmitted information is the resource subscribe response; and the information version identity is used to identify ae version of the first attribute of the first service.

88. The apparatus according to claim 86, wherein a payload of the resource subscribe response comprises at least one of: the response code, the third transaction identity, the service identity, the attribute identity, an attribute value, or the information version identity; and
wherein the attribute value is used to indicate a value of the first attribute; and the information version identity is used to identify a version of the first attribute of the first service.

89. An electronic device, comprising: a processor, and a transceiver connected to the processor; wherein:
the transceiver is configured to receive resource change information from a server, wherein the resource change information is used to indicate a change of a first element in a first attribute of a first service, the first attribute is an array attribute of the first service, and the first element is an element of the first attribute that has changed.

90. An electronic device, comprising: a processor, and a transceiver connected to the processor; wherein:
the transceiver is configured to send resource change information to a client, wherein the resource change information is used to indicate a change of a first element in a first attribute of a first service, the first attribute is an array attribute of the first service, and the first element is an element of the first attribute that has changed.

91. A computer-readable storage medium having a computer program stored thereon, wherein the computer program is configured to, when executed by a processor of an electronic device, implement the method for transmitting the information according to any one of claims 1 to 22.

92. A computer-readable storage medium having a computer program stored thereon, wherein the computer program is configured to, when executed by a processor of an electronic device, implement the method for transmitting the information according to any one of claims 23 to 44.
